(19) Europäisches Patentamt
European Patent Office
Office européen des brevets

(11) **EP 2 584 693 B1**

(12) **EUROPEAN PATENT SPECIFICATION**

(45) Date of publication and mention
of the grant of the patent:
**13.03.2019 Bulletin 2019/11**

(51) Int Cl.:
**H02P 6/16** *(2016.01)* **H02P 6/20** *(2016.01)*
**H02P 6/00** *(2016.01)* **H02P 6/14** *(2016.01)*

(21) Application number: **12189117.0**

(22) Date of filing: **18.10.2012**

(54) **METHOD OF CALIBRATING A DRIVE SYSTEM**

VERFAHREN ZUR KALIBRIERUNG EINES ANTRIEBSSYSTEMS

PROCÉDÉ D'ÉTALONNAGE D'UN SYSTÈME DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.10.2011 GB 201118004**

(43) Date of publication of application:
**24.04.2013 Bulletin 2013/17**

(73) Proprietor: **Nidec Control Techniques Limited
Newtown, Powys SY16 3BE (GB)**

(72) Inventor: **König, Holger Jürgen
53783 Eitorf (DE)**

(74) Representative: **Smith, Jeremy Robert
Kilburn & Strode LLP
Lacon London
84 Theobalds Road
London WC1X 8NL (GB)**

(56) References cited:
**WO-A2-2009/095397      US-A1- 2008 042 610
US-A1- 2010 253 258**

**Description**

The invention relates to a method of calibrating a drive system including a motor. In particular it relates to a method of determining a commutation offset for an encoder which works in conjunction with a synchronous motor.

**Background**

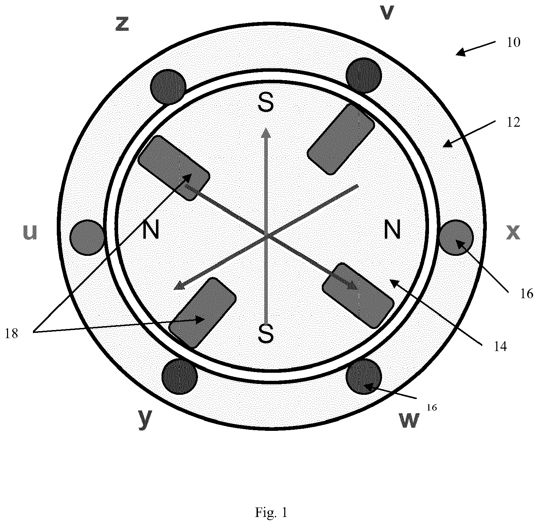

Synchronous motors are well known. An example of a synchronous motor is shown in figure 1. In general terms, a synchronous motor 10 comprises a stator 12 and a rotor 14. The stator 12 includes a number of coils or windings 16 through which electric currents can be fed. The rotor 14 comprises at least one pair of permanent magnets 18.

The example shown in figure 1 is a three phase synchronous motor, which has three separate windings 16 on the stator 12. As the skilled person will know, when an AC current is fed through a winding 16 it generates a changing magnetic field. Therefore, in operation, when three AC currents are fed through the three respective windings 16 of the synchronous motor 10, wherein those currents are out of phase with one another, a rotating magnetic field is created in the stator 12. The rotor 14 shown in figure 1 comprises two pairs of permanent magnets 18. The rotating magnetic field created in the stator 12 can cause rotation of the rotor 14 and the rotor can (usually) also be rotated by other means. The rotor 14 rotates synchronously with the stator 12, and the angle between them produces a resultant net torque, which dictates the net rotational movement of the rotor 14.

In order for the net rotational movement of the rotor 14 to be in a desired direction and at a desired speed at any given time, the net torque on the rotor 14 must be controlled. The position and angle at which current is injected through a winding 16 in a stator 12 relative to the permanent magnets in the rotor 14 will determine the configuration of the magnetic flux produced by that winding. This will affect the rotational movement imparted by the winding on the rotor, which in turn determines the net torque on the rotor. It is important to be able to determine the relative position between the stator windings and the permanent magnets of a rotor in a motor in order to determine and control the resultant torque. Only the component of a current that is perpendicular to the magnetic flux around a permanent magnet in a rotor will produce torque. For a stator which has 3 windings, the current vector resulting from the 3 currents in combination should be perpendicular to the magnetic flux inside the motor, in order to maximise torque. Therefore, maximum torque can be achieved for a synchronous motor by controlling the position of the rotor magnets relative to the stator windings, and also controlling the phase and timing of current fed through those windings during operation.

It is known to use an encoder with a synchronous motor for the purpose of position feedback. Encoders in general will be known to the skilled person. A rotary encoder, also known as a shaft encoder, can convert the angular position or motion of a shaft to an analogue or digital code. Two main types of rotary encoder are used in practical applications. The first is an incremental rotary encoder, which provides outputs only when the encoder is rotated. The second is an absolute encoder, which produces a unique code for each distinct angle of the shaft. Usually absolute encoders are digital absolute encoders and can be either optical or mechanical. For example an absolute encoder may be placed on one side of the shaft of a motor. It can comprise a rotatable disc on the rotor and some light emitting devices (LED's) on the stator, wherein the relative positioning between a point on the rotor and a point on the stator can be evaluated from the light emitted from the stator LED's.

An encoder can comprise memory on, for example, an electronic chip and a processor and/or it can provide feedback to another device that comprises a processing means. In a drive system, the controller or "drive unit" includes a processor which can receive and process information from the encoder. Primarily, an encoder operates as a feedback device to enable the drive unit to use the relative rotor magnet and stator winding positions for a synchronous motor at any time and synchronise those positions to the timing, phase and angle of current being driven through the stator windings. Therefore accurate encoder feedback can maximise torque output and so can ensure optimal running of the motor.

In order for a drive to accurately synchronise current with the relative positions of the stator and rotor of a motor, the phasing offset or "commutation offset" for that encoder must be known. The phasing offset or commutation offset is the angle between the zero position of the encoder and the north pole of the permanent magnet on the rotor with which it rotates. Knowing this offset essentially allows the user to calibrate (or align) the encoder with respect to the motor. This calibration enables the drive unit to make sense of the relative position measurements obtained, in order to use them for synchronisation with the current.

Motors can be used to power operation of a wide range of devices from very small scale machines to much larger assemblies such as elevators (also known as "lifts"). A particular type of elevator which can be operated using a synchronous motor (or servo motor) is a so-called "traction lift" or "rope lift". Either gearless or geared motors can be used for operating traction lifts.

According to prior art techniques, it is not possible to measure the commutation offset or phasing offset for a motor when that motor is attached to a load in a convenient and accurate manner. A prior art approach using a product known as "Unidrive SP" from Control Techniques Ltd enables measurement of the commutation offset for a motor but only in the absence of a load. This approach requires alignment of the motor to a magnetic pole so the motor needs to be able to move freely. Therefore if the motor is arranged to drive a large piece of equipment such as a traction lift, the cabin of the lift and its counter-weight must be fixed and the ropes must be removed so that the motor can turn freely without load, before the commutation offset can be calculated. Obviously, this is inconvenient for the user if the measurement needs to be performed during use, for example if an encoder is replaced for a gearless motor which has been driving a lift system for a period of time. The process of measuring the commutation offset in the situation can also be highly time consuming and expensive for the user.

Other prior art approaches are known for measuring the commutation offset of an encoder for a motor when that motor is at standstill. Such approaches are based on measuring inductance distribution. However they can be very difficult to implement in practice, particularly if the longitudinal and tranversal inductance for the motor are equal. No known approach enables accurate commutation offset measurement in a convenient, accurate and cost effective manner.

US 2010/253258 A1 discloses a method and apparatus for calibrating a position sensor mounted on the shaft of a permanent magnet synchronous motor, to control the position of a rotor of the permanent magnet synchronous motor relative to a magnetic field produced by a stator of the permanent magnet synchronous motor, in which a DC test current is supplied to stator windings of the permanent magnet synchronous motor to generate a definite magnetic field.

The present invention is defined by the appended independent claims. Specific embodiments are defined in the dependent claims. According to an aspect a method is provided for calibrating a drive system wherein that drive system includes a motor comprising a rotor having a permanent magnet and a stator having an electric conductor wherein the rotor is rotably moveable with respect to the stator. The drive system further comprises a detector such as an encoder for detecting a relative position of the rotor to the stator, wherein there is an angular offset between a position of the detector and a position of the rotor, and a controller for controlling a supply of current to the conductor based on the relative positions of the rotor and stator. The method comprises setting the motor to standstill, applying a brake to the motor and determining an angular offset between the rotor and the detector. This determination is made by assuming an initial value of the offset between the detector and the rotor and calculating a characteristic of a current supply required, such as its phase timing or angle, in order to maximise torque on the rotor for that assumed initial value of the offset. The method further comprises supplying current having that characteristic to the conductor when the brake is applied and determining a displacement of the rotor from its standstill position, when the brake remains applied, as a result of that current. This process is repeated for a plurality of different assumed values of the offset, until the assumed value has been changed by 360 degrees. Thereafter a functional relationship is calculated between the assumed value of the offset and the measured displacements of the rotor and that functional relationship is used to determine the correct value of the offset.

The functional relationship between the assumed values of the offset and the measured displacements of the rotor may be represented as a Fourier series. A Fourier transform such as a discrete Fourier transform may be applied to that Fourier series in order to determine the correct value of the offset. The displacement of the rotor from its standstill position for each assumed value of the offset may be allowed only up to a predetermined displacement threshold wherein, if that threshold is exceeded, it is determined that the braking force on the motor is not strong enough and the test is repeated with the motor braked more strongly.

The method can further comprise using the determined value of the offset between the detector and the rotor to calibrate the detector to the motor for subsequent use. Once calibrated, the detector can determine an instantaneous relative position between the rotor and the stator and the controller can control a supply of electricity to the electric conductor on the stator based on said relative position, for example to maximise torque applied to the rotor.

According to another aspect a drive system is provided wherein the drive system comprises a motor having a rotor, a stator, a detector and a controller wherein the controller is arranged and operable to control supply of current to a conductor on the stator based on its relative position to the rotor by determining an angular offset between the rotor and detector according to the method set out above.

According to an aspect, a computer, drive unit or computer processor is provided programmed and operable to determine an angular offset between a detector and a rotor in a drive system according to the method set out above.

## Figures

Embodiments and examples will now be described with reference to the figures of which:

Figure 1 shows a cross-sectional representation of a synchronous motor;
Figure 2 is a flow diagram showing a method for obtaining a commutation offset.

## Overview

In overview, a method is provided for calibrating a drive system by determining the phasing offset or commutation offset between an encoder and the north pole of a permanent magnet within a motor which is comprised in the drive system. The motor may be a synchronous or servo motor for driving operation of a mechanical device. For example, the servo motor may act as a traction drive for a traction lift or rope lift.

The method can be implemented when the motor is under load. So, in the example of a servo motor acting as a traction drive, there is no need to fix the cabin or counterweight or to remove the ropes of the traction lift before performing the offset measurement.

The determination is made when the motor is at "standstill", meaning that it is made when the motor (which may or may not have a load applied thereto) is initially stationary and has a brake applied to it in order to substantially prevent movement of the motor if a torque is applied thereto.

The method comprises programming the drive unit (or other controller) to assume an initial (arbitrary) value for the commutation offset. The controller then uses that initial value of the commutation offset, along with the relative stator and rotor positions as detected by the encoder, to calculate the phase and timing of current through the stator windings that should result in maximum torque on the motor for that value of the commutation offset. A current is then applied to the stator windings at a fixed level, in accordance with the calculated phase and timings.

When the current is applied to the stator windings a rotating magnetic field is produced in the stator and so torque will be applied to the motor. Even though the motor is fixed with the brake, the rotor will not be absolutely fixed and so there will be a small displacement of the rotor when the current is applied to the stator. This micro-movement or displacement of the rotor is recorded for the initial assumed value of the commutation offset. In order to determine the correct value for the commutation offset, a plurality of incremental (or step-wise) changes are made to the assumed value of the commutation offset and the drive unit calculates the current phase and timing that should maximise torque for each value and applies the current accordingly.

The corresponding rotor displacements are recorded for each value of commutation offset, until the assumed value of the commutation offset has been changed by 360 degrees electrical as compared to its initial value. The displacement values recorded are then used to determine the correct value of the commutation offset, for example by applying Fourier analysis.

When the assumed value of the commutation offset was correct, the drive unit will have calculated the optimal current phase and timing most accurately and so the applied torque or net torque on the rotor will have been maximised. Therefore the correct value of commutation offset (co) should correspond to the largest corresponding displacement ($d_i$) of the rotor from standstill when the brake is applied. In practice, real world effects such as brake backlash and the effect of the load can distort the observed relationship between commutation offset and rotor displacement. Using Fourier analysis is therefore useful since it takes all measurement points into account and thereby yields an accurate result even when the function is disturbed by such effects.

The determined correct value of the commutation offset can be used to calibrate the encoder to the motor. This provides the drive unit with a reference position, to make sense of the relative positions of the stator and rotor of the motor. It therefore enables the drive unit to accurately control current supply to the stator windings, to synchronise the current with those relative positions and thereby maximise and control the torque on the rotor.

### Detailed Description

Figure 1 shows the component parts of a synchronous motor 10. An encoder (not shown) can be mounted on, or integral to, the shaft of the motor in order to rotate with the rotor 14. As mentioned in the background section above, the phasing offset or commutation offset of a motor 10 comprises the angular displacement or offset of the zero position of the encoder as compared to the north pole of the permanent magnet(s) of the rotor 14. The zero position of the encoder may be physically shown as a zero marking on the encoder body or it may be a virtual reference point, representing a point on the encoder before it is rotated by the shaft of the motor.

In order to provide accurate feedback for correct current control within the motor 10, the zero position for the encoder must either be physically aligned with the north pole of the permanent magnets on the rotor 14, or the offset between that zero position and north pole must be known and accounted for. In practice it is difficult and time consuming to align the zero position of an encoder with the north pole of the rotor with which it operates during manufacture or assembly of the motor. Therefore it is highly preferable to instead fix the encoder to the shaft of a motor with the zero position of the encoder being at an arbitrary position and then to determine the phasing offset or commutation offset between that zero position and the north pole.

Before determining the value of the commutation offset, the user may wish to determine the position of the north pole of the permanent magnet 18 of the rotor 14. As is known to the skilled reader, this can be found by running DC current through the winding(s) 16 on the stator 12. This current will create a fixed magnetic field with which the permanent magnets 18 of the rotor 14 will align. The north pole of the permanent magnets can thus be determined from that alignment.

The commutation offset will comprise the angular separation between the north pole point on the rotor and the point on the rotor or shaft which corresponds to the zero position of the encoder. If the zero position is marked on the encoder, the commutation angle can be seen when DC current is fed through the stator windings. However merely seeing the commutation offset is not enough; it must be measured for accurate current control to maximise torque for the motor.

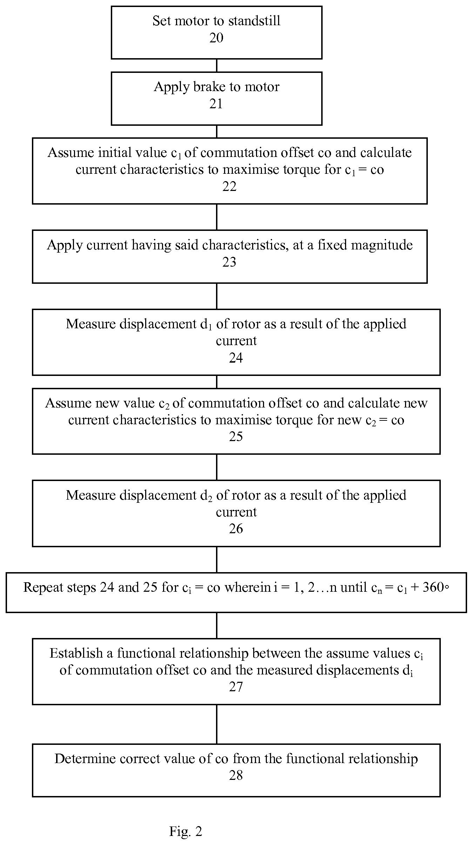

A method for measuring the phasing offset or commutation offset of a synchronous motor at standstill can be better understood with respect to figure 2 herein.

As a first step, the motor should be set to standstill 20, with no applied torque. The motor is then prevented from rotating freely - this is normally be done by applying a brake to the motor 21. However, it is not necessary to remove any load from the motor or to fix that load. Once the motor has been set to standstill and braked, the device assumes an initial value ($c_1$) for the commutation offset (co) and calculates the current characteristics such as phase angle and timing through the stator windings that should result in maximum torque for $co=c_1$ at step 22. Thereafter, the active current is supplied to the stator winding(s) at the calculated phase angle and timing and is controlled to be at a fixed magnitude 23. As a result of applying the current, a constant torque is applied to the motor (wherein the brake counteracts that constant torque in order to keep the motor substantially stationary). Preferably the constant torque should be set to between 20 and 100 percent nominal torque however it is possible for the method to be implemented using a lower constant torque value, if desired. The constant torque should not exceed 100 percent of the nominal torque. Furthermore, the brake should be able to withstand an additional motor torque of about 20 percent of the nominal torque during the testing process.

Even though the brake is applied to the motor, the applied torque will cause some displacement of the rotor. The braked motor resembles a spring when current is fed to the stator, with the braking force of the brake acting against the turning force imparted by the rotating magnetic fields. The small movement or displacement $d_1$ that is caused when the current is applied for the initial value of the commutation offset is measured at step 24, using the encoder.

The next step in the method is to make an incremental change 25 to the assumed value of the commutation offset between the encoder and the north pole of the motor. When the commutation offset is changed, the drive unit will calculate and apply a different current phase and timing, for maximization of the applied torque. Because the magnitude (or level) of the current is fixed, this change to the phase and timing will change the angle between magnetic flux and current in the motor, hence changing the torque, and so will cause a different slight movement of the rotor from its initial standstill position, when the brake is applied thereto. For a gearless motor, that movement would be microscopic, usually between 0.01 and 0.1 degrees, for example around 0.03 degrees of rotation. The next step in the method is therefore to measure that microscopic motion or displacement 26 that occurs for the newly-assumed value of the commutation offset.

The steps of making an incremental change to the assumed value of the commutation offset 25 and measuring the corresponding displacement 26 are repeated for a plurality of commutation offsets $c_i$ wherein i = 1, 2...n. Each time the assumed value of the commutation offset $c_i$ is changed, it is important to wait for a settling time before measuring the corresponding displacement $d_i$. The corresponding displacements $d_i$ are determined and recorded for each incremental change in $c_i$ until, after n steps, the commutation offset $c_i$ has been changed by 360 degrees electrical. When the commutation offset $c_i$ has been changed by 360 degrees and the corresponding displacements $d_i$ for each step have been measured, the functional relationship between the recorded displacement and commutation offset change values is determined 27 and the commutation offset (co) is calculated 28 therefrom. Further details of this calculation are given below.

In principle, one might expect the displacement of the rotor when the brake is applied to have a sinusoidal relationship with the value of the commutation offset. This is a consequence of Lorentz law which dictates that torque is the cross product of magnetic flux and current. Changing the assumed value of commutation offset (co) changes the calculation of the current characteristics that should optimise torque (if that assumed value was correct) and so in practice it changes the angle between the applied current and magnetic flux in the motor. The torque should vary sinusoidally with that angle, for a fixed level of current, therefore so should the displacement of the rotor. If this were the case, it would be possible to determine the correct value of commutation offset by looking for the maximum value of the sinusoidal function produced when the displacement and commutation offset values are plotted against one another. The correct value should yield a maximum torque and so a maximum displacement.

However it has been recognised herein that the measured displacement will not vary purely sinusoidally with assumed value of commutation offset in practice. Physical effects from, for example, the brake backlash and the load on the motor, such as the cabin load if the motor is part of a traction lift system, will be superimposed on the theoretical sinusoidal function. In order to take these real-world effects into account, the method described herein obtains the commutation offset by determining a functional relationship between the recorded commutation offset values $d_i$ and displacement values $c_i$ and performing Fourier analysis on that functional relationship.

Fourier analysis including Fourier transforms and Fourier series in general will be well known to the skilled reader. In basic terms, a Fourier series for a function is an approximation of that function as a (potentially infinite) combination of oscillating functions. It is represented as the sum of sine (sin) and cosine (cos) functions. In the present method, the functional relationship between $c_i$ and $d_i$ is represented as a Fourier series in order to determine the commutation offset (co). It has been recognized herein that representing the functional relationship between $c_i$ and $d_i$ as a Fourier series is particularly useful because, despite the disturbances by real world effects making the relationship not purely sinusoidal, Lorentz law determines that the relationship should nonetheless be periodic. Furthermore, Fourier analysis and representing a functional relationship as a Fourier series enables all measurement points (or as many measurement points as desired by the user) to be taken into account. Therefore the resulting determination of the correct value of the commutation offset will be more accurate.

As mentioned above, when the assumed value for the commutation offset as used by the drive for calculating current characteristics is correct, and that current is applied to the stator windings, the applied torque on the motor and hence the displacement of the rotor $d_i$ should be maximised. The torque should vary periodically with the assumed value of the commutation offset $c_i$ and so the displacement $d_i$ of the rotor when the brake is applied should also vary periodically with the assumed values of commutation offset. It has been recognised herein that an accurate method for obtaining the correct value of the commutation offset from the measured values is to apply a discrete Fourier transform (DFT) to the Fourier series representing the measured functional relationship between $c_i$ and $d_i$. The correct value of the commutation offset co, which led to the maximum displacement, can be found from the phase shift of the fundamental peak of the Fourier-transformed function.

A mathematical representation of the Fourier analysis applied in the present method is shown in equations 1 and 2 below. As the skilled reader will see, $c_i$ is changed from an angle in degrees to an angle in radians in order to calculate the sine and cosine sums in equations 1 and 2. In order to calculate co, which corresponds to the phase shift of the fundamental of the DFT function, Ss is divded by Sc to give a tangent value of an intermediate value, co_row. In equation 3 below therefore the arc tangent of Ss over Sc is calculated and the resultant value is converted back to degrees from radians, to output a value co row.

Because the arc tangent is a repeating function which goes from minus 90 degrees to plus 90 degrees, in some situations it will be necessary to amend the value co row output from equation 3 in order to give the actual value of the commutation offset co, which could be between 0 and 360 degrees. The routine set out below shows how those conversions are made dependent on whether the values for Ss and/or Sc are positive or negative.

The mathematical representations of the Fourier analysis are given below:

$$Ss = \sum di * \sin(ci * \pi / 180) \qquad (1)$$

$$Sc = \sum di * \cos(ci * \pi / 180) \qquad (2)$$

$$co\_row = 180° * atan ( Ss / Sc) / \pi \qquad (3)$$

- if Ss >= 0 then

  - if Sc >= 0 then

    - co = co_row + 180°

  - else

    - co = co_row + 180°

  - endif

- else

  - if Sc >= 0 then

- co = co_row + 360°

  - else

- co = co_row + 180°

  - endif

  ○ endif

The commutation offset co is a phase offset measured in degrees electrical. It has a range from zero to 360 degrees electrical. As the skilled person will know, 360 degrees electrical is the same as 360 mechanical of the motor shaft divided by the number of pole pairs of permanent magnets within the rotor. So for an eight pole motor, which has four pole pairs, 360 degrees electrical is 90 degrees of a mechanical rotor turn.

Once the correct value of the commutation offset co has been calculated as described above, it can be used to calibrate or tune the encoder for subsequent use with the motor. This can be done automatically and/or it can be user controlled. As mentioned above, the encoder senses relative positioning between the stator and rotor of a motor and can feed that information back to a processor, for example a drive unit, in order to synchronise that relative positioning with the current fed into the stator windings, to maximise torque for the motor. In order to accurately determine the relative positioning of the rotor and stator, the encoder must know its own positioning relative to the north pole of the rotor, which is why calculation of the commutation offset co is very important.

Because the displacement of the rotor will only be very small when the assumed value of the commutation offset is changed during the above described method, many measurement devices will simply not be sensitive enough to accurately measure those displacements. However it is possible to employ a measurement device which can do so. It has been recognised herein that an encoder can be selected and arranged to measure the displacement values accurately. The encoder should be a sincos encoder of a relatively high resolution. For example an SC.Endat, SC.Hiper or SC.SSI encoder can be used.

In general terms, the encoder (or other detector) used should be sensitive enough to detect displacement of the motor shaft or rotor at a very small level. For example the encoder can be arranged to measure the displacement in increments wherein one increment is 1/65536 of a complete turn (or rotation) of the rotor, or less. If the encoder is arranged to measure the displacements as a result of the incremental changes to the assumed value of the commutation offset in unit-less steps or increments, and if a particular change in commutation offset results in a displacement of less than one step or increment, the test can be repeated using increased constant torque (achieved by changing magnitude of the constant current at step 23 in figure 2). The encoder may be able to record or filter the measurement values, or it may just feed them back to a processor, for example a processor comprised within a drive unit.

The drive unit can be programmed to abort the testing method if certain conditions are not met. For example, if the displacement $d_i$ at any time exceeds a predetermined value, for example if the rotor turns by more than 1/16 of a complete turn, the drive unit can determine that the motor is not fixed enough by the brake and so can abort the test in order for the motor to be set properly to standstill. Additionally or alternatively, if it is determined that the resolution of the encoder is not high enough to detect the displacements caused by the application of the current when the brake is applied to the motor, and so the system cannot ultimately determine the correct value of the commutation offset, the test can be aborted since it would not output useful results.

In practice it may be necessary to change the encoder entirely or to shift an encoder relative to the rotating part(s) of a motor after the motor has already been implemented into a drive system such as a lift system. For ease, speed and cost effectiveness, it is highly desirable for an encoder which has been changed, moved or replaced to be calibrated to the motor without having to disrupt the entire system. In particular, it is highly desirable for the encoder to be calibrated without removing the load from the motor as in practice doing so could be very difficult and/or time consuming. The method described herein enables an encoder to be calibrated to a motor and thus to be operated to provide accurate torque determination and control, without having to remove any load from the motor. Instead, the motor merely needs to be set to standstill using a simple mechanical brake or other appropriate means, which will already be present in the system.

The method described herein does not require any additional measurement or processing means to be incorporated into a motor or drive system in order to calibrate it. As described above, relatively high resolution encoders are already available. Such encoders have the detection sensitivity and capability to measure the small displacements necessary for this method. Similarly, conventional drive systems include drive units or other processing means which can perform a Fourier analysis using those measured values in order to output an accurate and reliable value of the commutation offset.

Performing Fourier analysis on the measured values does not place a significant computational burden on the processors conventionally used in drive systems and so the calculation can be performed quickly. That notwithstanding, the calculation is accurate because it uses all the available measurements and takes real world effects such as brake backlash and the effect of load on the motor into account, rather than relying on a single result or on a purely theoretical mathematical relationship between commutation offset and motor displacement, which could yield inaccurate results. In addition, unlike certain prior art methods, the present method does not require the monitoring or manipulation of complex values such as inductance distribution. Instead, only displacement of the rotor needs to be measured and recorded.

Hence an accurate yet efficient and cost effective method is provided.

Once the commutation offset for a motor is known, the motor can be operated within a range of different systems. The example of a lift system is given above however the solution described herein can be implemented in other types of mechanical system, from very small systems to large industrial systems. A gearless motor is mentioned above however the method can also be implemented for a geared motor. Furthermore, particular types of encoder have been mentioned above however any encoder or other means that can detect and record small scale displacements of a motor when it is fixed can be used.

A computer such as a drive unit or a general-purpose computer can be configured or adapted to perform the described method. In one embodiment the computer comprises a processor, a memory, and a display. The computer or drive unit can also comprise one or more input devices (such as a mouse and/or keyboard) and/or a communications adapter for connecting to other computers or networks.

In operation the computer can execute computer-executable instructions held in the memory and the results of the processing may be displayed to a user on the display. User inputs for controlling the operation of the computer may be received via input device(s).

A computer readable medium (e.g. a carrier disk or carrier signal) having computer-executable instructions adapted to cause a computer to perform the descibed methods may be provided. A computer program having code portions executable by the computer readable medium may also be provided.

A record carrier comprising instructions for carrying out the described method may be provided. The record carrier may be a solid state record carrier such as a volatile or non volatile memory, ROM, EPROM, or EEPROM. The record carrier may be a magnetic and/or an optical carrier such as a CD-ROM or a DVD-ROM. The record carrier may comprise a signal such as a wireless signal or a signal that can be communicated down a wire such as a fibre optic wire.

Embodiments have been described above by way of example only. It will be appreciated that variations may be made which are still within the scope of the invention.

## Claims

1. A method of calibrating a drive system, said drive system including a synchronous motor (10) comprising a rotor (14) including a permanent magnet (18) and a stator (12) having an electric conductor (16), wherein said permanent magnet (18) is rotatably moveable with respect to said electric conductor (16);

   the drive system further comprising a detector for detecting a relative position of the rotor (14) to the stator (12), and a controller for controlling a supply of current to the conductor (16), based on said relative position;

   the method **characterized by** setting the synchronous motor (10) to standstill, applying a brake to the synchronous motor (10) and determining an angular offset (co) between the rotor (14) and the detector by:

   assuming an initial value (ci) of the offset (co) between the detector and the rotor (14);

   calculating a characteristic of the current supply required to maximise torque on the rotor (14) for that assumed initial value (ci) of the offset (co);

   supplying current having said characteristic to the conductor (16), when the brake is applied;

   determining a displacement (di) of the rotor (14) from its standstill position, when the brake is applied, as a result of said current;

   making a plurality of incremental changes to the assumed value (ci) of the offset (co), wherein the incremental changes are performed until the assumed value (ci) of the offset (co) has been changed by 360 degrees;

   determining a displacement of the rotor (14) from its standstill position, when the brake is applied, for each assumed value (ci) of the offset (co);

   calculating a functional relationship between the assumed values (ci) of the offset (co) and the displacement (di) of the rotor when the brake is applied;

   representing the functional relationship between the assumed values (ci) of the offset (co) and the displacement (di) of the rotor when the brake is applied as a Fourier series; and

   using said functional relationship to determine the correct value of the offset (co).

2. A method as claimed in claim 1 wherein the step of determining the correct value of the offset (co) comprises determining the assumed value (ci) of the offset (co) for which the corresponding displacement (di) was maximised.

3. A method as claimed in any preceding claim further comprising applying a Fourier transform to the Fourier series, wherein the correct value of the offset (10) is determined from a phase shift of the fundamental peak in the Fourier-transformed function, preferably wherein said Fourier transform is a discrete Fourier transform (DFT).

4. A method as claimed in any preceding claim wherein the step of applying a brake to the synchronous motor allows displacement of the rotor only up to a predetermined displacement threshold, preferably wherein said predetermined displacement threshold is 1/16th of a turn of the rotor.

5. A method as claimed in any preceding claim wherein the displacement of the rotor as a result of each incremental change to the assumed value of the offset comprises a rotational displacement of between 0.01 and 0.10 degrees.

6. A method as claimed in any preceding claim further comprising the step of using the determined correct value of the offset (co) to calibrate a physical position of the detector relative to a point on the synchronous motor, preferably wherein said point on the synchronous motor comprises a magnetic north pole.

7. A method as claimed in any preceding claim further comprising:

using the determined value of the offset (co) to calibrate the detector to the synchronous motor and thereafter determining a relative position between the rotor and the stator, and
using the controller to control a supply of electricity to the electric conductor based on said relative position.

8. A method as claimed in claim 7 wherein the controller controls the supply of electricity in order to maximise torque applied to the rotor, preferably wherein said supply of electricity is an AC supply.

9. A method as claimed in any preceding claim wherein said detector comprises an encoder.

10. A method as claimed in any preceding claim wherein the synchronous motor is under load.

11. A drive system including a synchronous motor (10) comprising a rotor (14) having a permanent magnet (18) and a stator (12) having an electric conductor (16), wherein said permanent magnet (18) is rotatably moveable with respect to said electric conductor (16);
said drive system further comprising a detector arranged and operable to detect a relative position between the rotor (14) and the stator (12), wherein there is an angular offset (co) between the rotor (14) and the detector;
the drive system further **characterized by** a controller arranged and operable to control a supply of current to the conductor (16), based on said relative position, by performing the following steps when the synchronous motor (10) is set to standstill and braked:

assuming an initial value (ci) of the offset (co) between the detector and the rotor (14);
calculating a characteristic of the current supply required to maximise torque on the rotor (14) for that assumed initial value (ci) of the offset (co);
supplying current having said characteristic to the conductor (16), when the brake is applied;
determining a displacement (di) of the rotor (14) from its standstill position, when the brake is applied, as a result of said current;
making a plurality of incremental changes to the assumed value (ci) of the offset (co), wherein the incremental changes are performed until the assumed value (ci) of the offset (co) has been changed by 360 degrees;
determining a displacement of the rotor from its standstill position, when the brake is applied, for each assumed value (ci) of the offset (co);
calculating a functional relationship between the assumed values (ci) of the offset (co) and the displacement (di) of the rotor when the brake is applied;
representing the functional relationship between the assumed values (ci) of the offset (co) and the displacement (di) of the rotor when the brake is applied as a Fourier series; and
using said functional relationship to determine a correct value of the offset (co).

12. A drive system as claimed in claim 11 wherein said controller is arranged and operable to calibrate the detector to the synchronous motor (10) based on the determination of said offset (co).

**13.** A drive system as claimed in claim 12 wherein the controller is arranged and operable to automatically calibrate the detector to the synchronous motor (10) upon connection of said detector into the drive system.

**Patentansprüche**

**1.** Verfahren zur Kalibrierung eines Antriebssystems, wobei das Antriebssystem einen Synchronmotor (10) aufweist, umfassend einen Rotor (14), der einen Permanentmagneten (18) und einen Stator (12) mit einem elektrischen Leiter (16) aufweist, wobei der Permanentmagnet (18) in Bezug auf den elektrischen Leiter (16) drehbar bewegbar ist; wobei das Antriebssystem ferner einen Detektor zum Detektieren einer relativen Position des Rotors (14) zu dem Stator (12), und eine Steuereinheit zum Steuern der Zufuhr von Strom zu dem Leiter (16), auf der Basis der relativen Position, umfasst;
wobei das Verfahren **gekennzeichnet ist durch**:
Versetzen des Synchronmotors (10) in den Stillstand, Anlegen einer Bremse an den Synchronmotor (10) und Bestimmen einer Winkelversetzung (co) zwischen dem Rotor (14) und dem Detektor **durch**:

Annehmen eines Initialwerts (ci) der Versetzung (co) zwischen dem Detektor und dem Rotor (14);
Berechnen einer Charakteristik der Stromzufuhr, die erforderlich ist, um das Drehmoment auf den Rotor (14) für diesen angenommenen Initialwert (ci) der Versetzung (co) zu maximieren;
Zuführen von Strom mit der Charakteristik zu dem Leiter (16), wenn die Bremse angelegt wird;
Bestimmen einer Verschiebung (di) des Rotors (14) aus seiner Stillstandposition, wenn die Bremse angelegt wird, als Ergebnis des Stroms;
Vornehmen einer Vielzahl inkrementaler Änderungen an dem angenommenen Wert (ci) der Versetzung (co), wobei die inkrementalen Änderungen durchgeführt werden, bis der angenommene Wert (ci) der Versetzung (co) um 360 Grad geändert wurde;
Bestimmen einer Verschiebung des Rotors (14) aus seiner Stillstandposition, wenn die Bremse angelegt wird, für jeden angenommenen Wert (ci) der Versetzung (co);
Berechnen einer funktionellen Beziehung zwischen den angenommenen Werten (ci) der Versetzung (co) und der Verschiebung (di) des Rotors, wenn die Bremse angelegt wird;
Darstellen der funktionellen Beziehung zwischen den angenommenen Werten (ci) der Versetzung (co) und der Verschiebung (di) des Rotors, wenn die Bremse angelegt wird, als Fourier-Serie; und
Verwenden der funktionellen Beziehung zur Bestimmung des korrekten Werts der Versetzung (co) .

**2.** Verfahren nach Anspruch 1,
wobei der Schritt des Bestimmens des korrekten Werts der Versetzung (co) umfasst: Bestimmen des angenommenen Werts (ci) der Versetzung (co), für welche die entsprechende Verschiebung (di) maximiert wurde.

**3.** Verfahren nach einem der vorhergehenden Ansprüche, ferner umfassend:
Anlegen einer Fourier-Transformation an die Fourier-Serie, wobei der korrekte Wert der Versetzung (10) aus einer Phasenverschiebung des Grundpeaks in der Fourier-transformierten Funktion bestimmt wird, wobei vorzugsweise die Fourier-Transformation eine diskrete Fourier-Transformation (DFT) ist.

**4.** Verfahren nach einem der vorhergehenden Ansprüche,
wobei der Schritt des Anlegens einer Bremse an den Synchronmotor eine Verschiebung des Rotors nur bis zu einer vorherbestimmten Verschiebungsschwelle gestattet, wobei vorzugsweise die vorherbestimmte Verschiebungsschwelle 1/16tel einer Umdrehung des Rotors beträgt.

**5.** Verfahren nach einem der vorhergehenden Ansprüche,
wobei die Verschiebung des Rotors als Ergebnis jeder inkrementalen Änderung an dem angenommenen Wert der Versetzung eine Drehverschiebung zwischen 0,01 und 0,10 Grad umfasst.

**6.** Verfahren nach einem der vorhergehenden Ansprüche,
ferner umfassend den Schritt des Verwendens des bestimmten korrekten Werts der Versetzung (co), um eine physische Position des Detektors relativ zu einem Punkt auf dem Synchronmotor zu kalibrieren, wobei vorzugsweise der Punkt auf dem Synchronmotor einen Magnetnordpol umfasst.

**7.** Verfahren nach einem der vorhergehenden Ansprüche, ferner umfassend:
Verwenden des bestimmten Werts der Versetzung (co), um den Detektor auf den Synchronmotor zu kalibrieren, und danach Bestimmen einer relativen Position zwischen dem Rotor und dem Stator, und Verwenden der Steuereinheit, um eine Zufuhr von Elektrizität zu dem elektrischen Leiter auf der Basis der relativen Position zu steuern.

8. Verfahren nach Anspruch 7,
wobei die Steuereinheit die Zufuhr von Elektrizität steuert, um das Drehmoment zu maximieren, das auf den Rotor ausgeübt wird, wobei vorzugsweise die Zufuhr von Elektrizität eine WS-Zufuhr ist.

9. Verfahren nach einem der vorhergehenden Ansprüche,
wobei der Detektor einen Codierer umfasst.

10. Verfahren nach einem der vorhergehenden Ansprüche,
wobei der Synchronmotor unter Last steht.

11. Antriebssystem, welches einen Synchronmotor (10) aufweist, umfassend einen Rotor (14), der einen Permanentmagneten (18) und einen Stator (12) mit einem elektrischen Leiter (16) aufweist, wobei der Permanentmagnet (18) in Bezug auf den elektrischen Leiter (16) drehbar bewegbar ist;
wobei das Antriebssystem ferner einen Detektor umfasst, der eingerichtet und betreibbar ist, eine relative Position zwischen dem Rotor (14) und dem Stator (12) zu detektieren, wobei eine Winkelversetzung (co) zwischen dem Rotor (14) und dem Detektor vorliegt;
wobei das Antriebssystem ferner **gekennzeichnet ist durch**:
eine Steuereinheit, die eingerichtet und betreibbar ist, eine Zufuhr von Strom zu dem Leiter (16), auf der Basis der relativen Position, zu steuern, indem die folgenden Schritte durchgeführt werden, wenn der Motor (10) in den Stillstand versetzt wird und gebremst wird:

Annehmen eines Initialwerts (ci) der Versetzung (co) zwischen dem Detektor und dem Rotor (14);
Berechnen einer Charakteristik der Stromzufuhr, die erforderlich ist, um das Drehmoment auf den Rotor (14) für diesen angenommenen Initialwert (ci) der Versetzung (co) zu maximieren;
Zuführen von Strom mit der Charakteristik zu dem Leiter (16), wenn die Bremse angelegt wird;
Bestimmen einer Verschiebung (di) des Rotors (14) aus seiner Stillstandposition, wenn die Bremse angelegt wird, als Ergebnis des Stroms;
Vornehmen einer Vielzahl inkrementaler Änderungen an dem angenommenen Wert (ci) der Versetzung (co), wobei die inkrementalen Änderungen durchgeführt werden, bis der angenommene Wert (ci) der Versetzung (co) um 360 Grad geändert wurde;
Bestimmen einer Verschiebung des Rotors (14) aus seiner Stillstandposition, wenn die Bremse angelegt wird, für jeden angenommenen Wert (ci) der Versetzung (co);
Berechnen einer funktionellen Beziehung zwischen den angenommenen Werten (ci) der Versetzung (co) und der Verschiebung (di) des Rotors, wenn die Bremse angelegt wird;
Darstellen der funktionellen Beziehung zwischen den angenommenen Werten (ci) der Versetzung (co) und der Verschiebung (di) des Rotors, wenn die Bremse angelegt wird, als Fourier-Serie; und
Verwenden der funktionellen Beziehung zur Bestimmung des korrekten Werts der Versetzung (co) .

12. Antriebssystem nach Anspruch 11,
wobei die Steuereinheit eingerichtet und betreibbar ist, den Detektor auf den Synchronmotor (10) auf der Basis der Bestimmung der Versetzung (co) zu kalibrieren.

13. Antriebssystem nach Anspruch 12,
wobei die Steuereinheit eingerichtet und betreibbar ist, automatisch den Detektor auf den Synchronmotor (10) bei der Verbindung des Detektors in das Antriebssystem zu kalibrieren.

**Revendications**

1. Procédé d'étalonnage d'un système de commande, ledit système de commande comprenant un moteur synchrone (10) comportant un rotor (14) comprenant un aimant permanent (18) et un stator (12) doté d'un conducteur électrique (16), ledit aimant permanent (18) étant mobile en rotation par rapport audit conducteur électrique (16) ;
le système de commande comportant en outre un détecteur servant à détecter une position relative du rotor (14) par rapport au stator (12), et un régulateur servant à réguler une alimentation en courant du conducteur (16), d'après ladite position relative ;

le procédé étant **caractérisé par** les étapes consistant à placer le moteur synchrone (10) en immobilité, appliquer un frein au moteur synchrone (10) et déterminer un décalage angulaire (co) entre le rotor (14) et le détecteur en :

présumer une valeur initiale (ci) du décalage (co) entre le détecteur et le rotor (14) ;
calculer une caractéristique de l'alimentation en courant nécessaire pour maximiser le couple sur le rotor (14) pour la valeur initiale présumée (ci) en question du décalage (co) ;
fournir un courant présentant ladite caractéristique au conducteur (16), lorsque le frein est appliqué ;
déterminer un déplacement (di) du rotor (14) à partir de sa position d'immobilité, lorsque le frein est appliqué, sous l'effet dudit courant ;
apporter une pluralité de modifications incrémentales à la valeur présumée (ci) du décalage (co), les modifications incrémentales étant effectuées jusqu'à ce que la valeur présumée (ci) du décalage (co) ait été modifiée de 360 degrés ;
déterminer un déplacement du rotor (14) à partir de sa position d'immobilité, lorsque le frein est appliqué, pour chaque valeur présumée (ci) du décalage (co) ;
calculer une relation fonctionnelle entre les valeurs présumées (ci) du décalage (co) et le déplacement (di) du rotor lorsque le frein est appliqué ;
représenter la relation fonctionnelle entre les valeurs présumées (ci) du décalage (co) et le déplacement (di) du rotor lorsque le frein est appliqué comme une série de Fourier ; et
utiliser ladite relation fonctionnelle pour déterminer la valeur correcte du décalage (co).

2. Procédé selon la revendication 1, l'étape de détermination de la valeur correcte du décalage (co) comportant la détermination de la valeur présumée (ci) du décalage (co) pour laquelle le déplacement (di) correspondant était maximisé.

3. Procédé selon l'une quelconque des revendications précédentes, comportant en outre l'application d'une transformation de Fourier à la série de Fourier, la valeur correcte du décalage (10) étant déterminée à partir d'un déphasage du pic fondamental dans la fonction issue de la transformation de Fourier, ladite transformation de Fourier étant de préférence une transformation de Fourier discrète (DFT).

4. Procédé selon l'une quelconque des revendications précédentes, l'étape d'application d'un frein au moteur synchrone ne permettant le déplacement du rotor que jusqu'à un seuil de déplacement prédéterminé, ledit seuil de déplacement prédéterminé étant de préférence d'1/16ème de tour du rotor.

5. Procédé selon l'une quelconque des revendications précédentes, le déplacement du rotor du fait de chaque modification incrémentale de la valeur présumée du décalage comportant un déplacement en rotation compris entre 0,01 et 0,10 degrés.

6. Procédé selon l'une quelconque des revendications précédentes comportant en outre l'étape consistant à utiliser la valeur correcte déterminée du décalage (co) pour étalonner une position physique du détecteur par rapport à un point sur le moteur synchrone, ledit point sur le moteur synchrone comportant de préférence un pôle Nord magnétique.

7. Procédé selon l'une quelconque des revendications précédentes comportant en outre les étapes consistant à :
utiliser la valeur déterminée du décalage (co) pour étalonner le détecteur au moteur synchrone puis déterminer une position relative entre le rotor et le stator, et utiliser le régulateur pour réguler une alimentation en électricité du conducteur électrique d'après ladite position relative.

8. Procédé selon la revendication 7 le régulateur régulant l'alimentation en électricité afin de maximiser le couple appliqué au rotor, ladite alimentation en électricité étant de préférence une alimentation à courant alternatif.

9. Procédé selon l'une quelconque des revendications précédentes, ledit détecteur comportant un codeur.

10. Procédé selon l'une quelconque des revendications précédentes, le moteur synchrone étant sous charge.

11. Système de commande comprenant un moteur synchrone (10) comportant un rotor (14) doté d'un aimant permanent (18) et un stator (12) doté d'un conducteur électrique (16), ledit aimant permanent (18) étant mobile en rotation par rapport audit conducteur électrique (16) ;
ledit système de commande comportant en outre un détecteur agencé et exploitable pour détecter une position relative entre le rotor (14) et le stator (12), un décalage angulaire (co) existant entre le rotor (14) et le détecteur ;
le système de commande étant en outre **caractérisé par** un régulateur agencé et exploitable pour réguler une alimentation en courant du conducteur (16), d'après ladite position relative, en réalisant les étapes suivantes lorsque le moteur synchrone (10) est placé en immobilité et freiné :

présumer une valeur initiale (ci) du décalage (co) entre le détecteur et le rotor (14) ;
calculer une caractéristique de l'alimentation en courant nécessaire pour maximiser le couple sur le rotor (14) pour la valeur initiale présumée (ci) en question du décalage (co) ;
fournir un courant présentant ladite caractéristique au conducteur (16), lorsque le frein est appliqué ;
déterminer un déplacement (di) du rotor (14) à partir de sa position d'immobilité, lorsque le frein est appliqué, sous l'effet dudit courant ;
apporter une pluralité de modifications incrémentales à la valeur présumée (ci) du décalage (co), les modifications incrémentales étant effectuées jusqu'à ce que la valeur présumée (ci) du décalage (co) ait été modifiée de 360 degrés ;
déterminer un déplacement du rotor à partir de sa position d'immobilité, lorsque le frein est appliqué, pour chaque valeur présumée (ci) du décalage (co) ;
calculer une relation fonctionnelle entre les valeurs présumées (ci) du décalage (co) et le déplacement (di) du rotor lorsque le frein est appliqué ;
représenter la relation fonctionnelle entre les valeurs présumées (ci) du décalage (co) et le déplacement (di) du rotor lorsque le frein est appliqué comme une série de Fourier ; et
utiliser ladite relation fonctionnelle pour déterminer une valeur correcte du décalage (co).

12. Système de commande selon la revendication 11, ledit régulateur étant agencé et exploitable pour étalonner le détecteur vis-à-vis du moteur synchrone (10) d'après la détermination dudit décalage (co).

13. Système de commande selon la revendication 12, le régulateur étant agencé et exploitable pour étalonner automatiquement le détecteur vis-à-vis du moteur synchrone (10) suite au raccordement dudit détecteur dans le système de commande.

Fig. 1

Set motor to standstill
20

Apply brake to motor
21

Assume initial value $c_1$ of commutation offset co and calculate
current characteristics to maximise torque for $c_1$ = co
22

Apply current having said characteristics, at a fixed magnitude
23

Measure displacement $d_1$ of rotor as a result of the applied
current
24

Assume new value $c_2$ of commutation offset co and calculate new
current characteristics to maximise torque for new $c_2$ = co
25

Measure displacement $d_2$ of rotor as a result of the applied
current
26

Repeat steps 24 and 25 for $c_i$ = co wherein i = 1, 2…n until $c_n$ = $c_1$ + 360°

Establish a functional relationship between the assume values $c_i$
of commutation offset co and the measured displacements $d_i$
27

Determine correct value of co from the functional relationship
28

Fig. 2

**EP 2 584 693 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010253258 A1